Europäisches Patentamt

(19) European Patent Office

Office européen des brevets

(11) Veröffentlichungsnummer: **0 046 149**
**B1**

(12) **EUROPÄISCHE PATENTSCHRIFT**

(45) Veröffentlichungstag der Patentschrift:
23.01.85

(51) Int. Cl.⁴: **B 60 R 5/04**

(21) Anmeldenummer: **80104869.5**

(22) Anmeldetag: **16.08.80**

(54) **Abdeckplane für einen in einem Personenwagen vorgesehenen Kofferraum.**

(30) Priorität: **10.10.79 DE 2941018**

(43) Veröffentlichungstag der Anmeldung:
**24.02.82 Patentblatt 82/8**

(45) Bekanntmachung des Hinweises auf die Patenterteilung:
**23.01.85 Patentblatt 85/4**

(84) Benannte Vertragsstaaten:
**CH FR GB IT LI SE**

(56) Entgegenhaltungen:
**DE - A - 1 630 866**
**DE - A - 2 413 070**
**DE - A - 2 659 684**
**DE - A - 2 941 711**
**DE - B - 2 733 165**
**US - A - 4 148 516**

(73) Patentinhaber: **Dr.Ing.h.c. F. Porsche Aktiengesellschaft, Porschestrasse 42, D-7000 Stuttgart 40 (DE)**

(72) Erfinder: **Burst, Hermann, Dipl.-Ing., Telemannstrasse 10, D-7255 Rutesheim (DE)**
Erfinder: **Macho, Leo, Eberdinger Strasse 5, D-7251 Hemmingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Abdeckplane für einen in einem Personenwagen vorgesehenen Kofferraum, der über eine um eine horizontale Scharnierachse bewegbare Heckklappe zugänglich ist, wobei die aus elastischem Werkstoff bestehende Abdeckplane am Aufbau und an der Heckklappe befestigt ist.

Eine bekannte Abdeckplane der eingangs genannten Gattung (DE-A 1 630 866) ist unmittelbar über Druckknöpfe am Aufbau bzw. der Heckklappe gehalten. Dieser Ausführung haftet der Nachteil an, daß insbesondere bei großem Öffnungswinkel der Heckklappe eine solche elastische Dehnbarkeit der Abdeckplane erforderlich ist, die teuere Werkstoffe verursacht. Auch bei Verwendung entsprechender Werkstoffe besteht dann immer noch die Gefahr, daß während der kalten Jahreszeit an der Abdeckplane Risse entstehen.

Bei einer anderen bekannten Kofferraumabdeckung (US-PS 4 148 516) wird die Abdeckung über ein dem Aufbau zugeordnetes, federnd elastisches Glied und ein gegebenenfalls aus gleichem Werkstoff bestehendes, an der Heckklappe angebrachtes Zugorgan betätigt. Hierbei ist nicht nur nachteilig, daß sich die Abdeckung aufgrund ihrer formsteifen Ausbildung nicht an im Kofferraum liegende, unterschiedliche Höhe aufweisende Gegenstände anpaßt, sondern daß das Glied und das Zugorgan einen ungerechtfertigt hohen Aufwand verursachen. Außerdem beanspruchen das Glied, das Zugorgan und ein beide abdeckendes Verkleidungsteil, die in Fahrzeuglängsrichtung ausgerichtet sind, viel Raum, was auf Kosten der unterzubringenden Gegenstände geht.

Schließlich ist eine Abdeckplane bekannt (DE-A 2 941 711), die an der entfernt von der Heckklappe liegenden Seite aufrollbar ausgebildet ist. Als nachteilig hat sich hierbei nicht nur der Aufwand für den Aufrollmechanismus gezeigt, sondern auch, daß die Breite der Abdeckplane ein funktionssicheres Aufrollen erschwert.

Es ist deshalb Aufgabe der Erfindung, eine Abdeckplane für einen Kofferraum zu schaffen, die in der Weise am Aufbau und an der Heckklappe befestigt ist, daß bei Betätigung der letzteren keine überhöhte Beanspruchung auf sie einwirkt. Dabei sollte aber auch sichergestellt sein, daß die Befestigung der Abdeckplane einfach und funktionsgerecht ist und ihr mit der Heckklappe zusammenwirkendes Betätigungssystem bei sicherer Funktion wenig Raum beansprucht.

Die Aufgabe wird durch die Merkmale des kennzeichnenden Teils des Anspruchs 1 gelöst. Weitere bevorzugte Merkmale der Erfindung sind in den Unteransprüchen enthalten.

Die mit der Erfindung hauptsächlich erzielten Vorteile sind darin zu sehen, daß die mittelbare Befestigung der Abdeckung mittels der Glieder eine Überbeanspruchung der Abdeckung bei Betätigung der Heckklappe verhindert. Die Glieder sind unstörend, d. h. ohne besonderen Raumanspruch, im Rohr bzw. dem U-Profil untergebracht. Die Anordnung der beiden Glieder im U-Profil, wovon jedes an gegenüberliegenden Seiten gehalten und umgelenkt ist (großer Federweg) stellt sicher, daß selbst bei großem Öffnungswinkel der Heckklappe die auf die beiden Glieder einwirkenden Beanspruchungen gering sind. Schließlich läßt sich die Abdeckung mittels der Befestigungsteile, die den durch gummielastische Schnüre dargestellten Gliedern zugeordnet sind und Schnellverschlüsse aufweisen, auf einfache Weise montieren.

In der Zeichnung wird ein Ausführungsbeispiel der Erfindung gezeigt und im folgenden beschrieben. Es zeigt

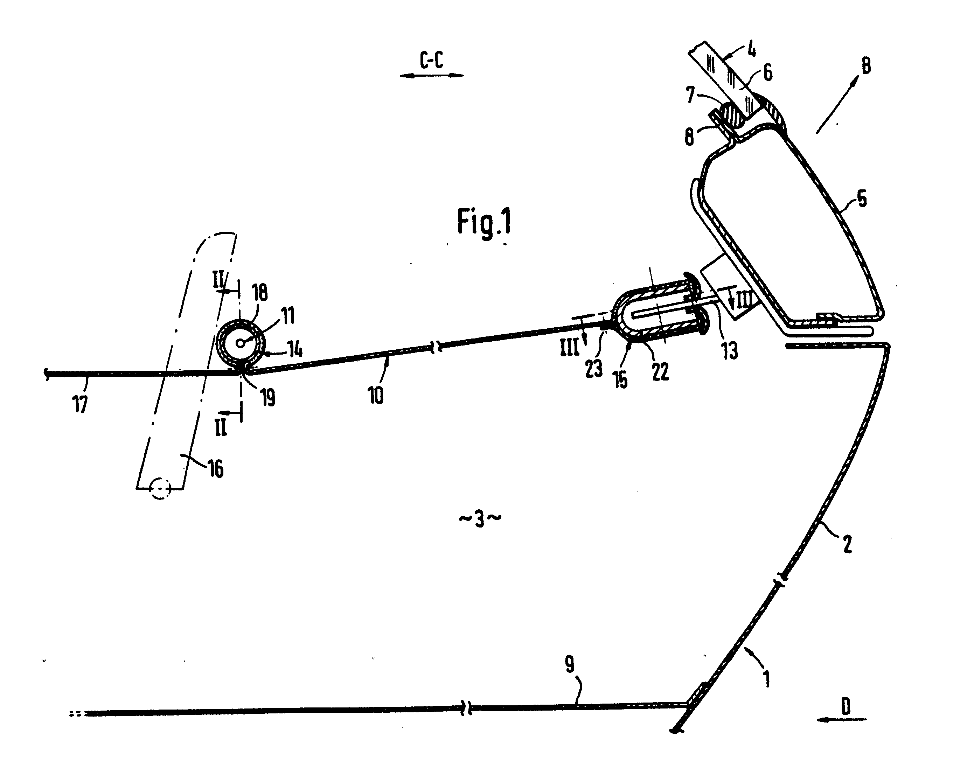

Fig. 1 einen Teillängsschnitt durch den Heckbereich eines Personenwagens mit der erfindungsgemäßen Abdeckplane,

Fig. 2 einen Schnitt nach der Linie II-II der Fig. 1 in größerem Maßstab,

Fig. 3 einen Schnitt nach der Linie III-III der Fig. 1 in größerem Maßstab,

Fig. 4 einen Schnitt nach der Linie IV-IV der Fig. 2.

Der Personenwagen 1 weist in dem dargestellten Bereich einen Aufbau 2 mit einem Kofferraum 3 auf. Der Kofferraum 3 ist über eine Heckklappe 4 zugänglich, die um eine nicht gezeigte, horizontal verlaufende Scharnierachse schwenkbar ist, dergestalt, daß sich die Heckklappe 4 in Richtung B bewegt. Letztere wird durch einen Rahmen 5 und eine Scheibe 6 gebildet, die unter Vermittlung eines Klebekörpers 7 an einem Flansch 8 des Rahmens gehalten ist. Zwischen Aufbau 2 und Heckklappe 4 ist ein nicht dargestelltes Schloß vorgesehen.

Der Kofferraum 3 wird einerseits durch eine horizontale Wand 9 und andererseits durch eine etwa parallel zu dieser verlaufenden Abdeckplane 10 begrenzt. Die Abdeckplane 10 besteht aus elastischem Werkstoff und ist mittels elastischer Glieder 11, 12, 13 am Aufbau 2 bzw. der Heckklappe 4 befestigt, wobei diese Glieder in hohlprofilartigen Elementen 14, 15 geführt sind.

Die Elemente 14, 15 erstrecken sich quer zur Fahrzeuglängsrichtung C-C und sind in besagter Richtung gesehen mit Abstand zueinander an der Abdeckplane 10 befestigt. Benachbart dem Rahmen 5 verläuft das Element 15. Demgegenüber ist das Element 14 hinter einem klappbaren Lehnenteil 16 einer Rücksitzanlage vorgesehen. Das Lehnenteil 16 kann im umgeklappten Zustand von einem Abschnitt 17 der Abdeckplane 10 abgedeckt werden.

Das Element 14, das zur aufbauseitigen Befestigung dient, wird durch ein Rohr 18 gebildet und ist zumindest teilweise von der Abdeckplane 10 umschlossen. Bei 19 ist die Abdeckplane 10 vernäht. Die Enden des Rohres 16 sind mit Einsätzen 20 versehen, die Führungsabschnitte 21 für das dort untergebrachte einzige Glied 11 aufweisen.

Das zur klappenseitigen Befestigung vorgesehene Element 15 ist durch ein im Querschnitt U-förmiges Profil 22 dargestellt, das liegend angeordnet ist und dessen offene Seite entgegen der Fahrtrichtung D zeigt. Das Profil 22 wird von der Abdeckplane 10 umschlossen, die hierzu bei 23 vernäht ist.

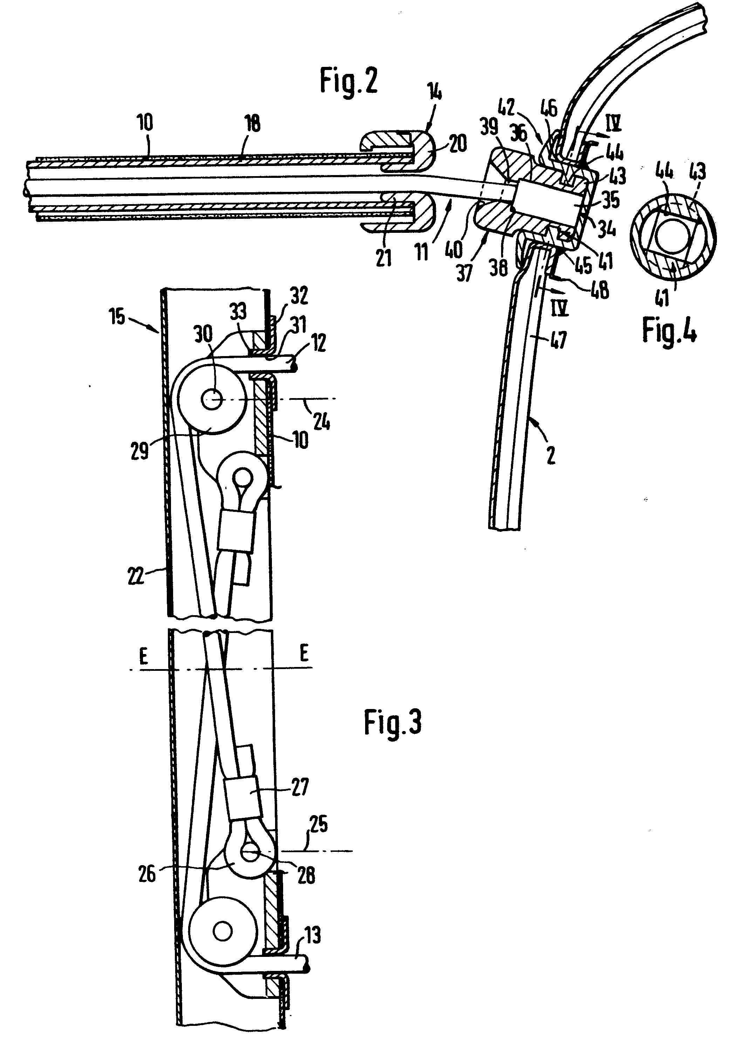

Gemäß Fig. 3 sind innerhalb des Profils 22 die beiden Glieder 12, 13 vorgesehen. Das Glied 12 ist auf gegenüberliegenden Seiten 24, 25, d. h. außerhalb einer Mittellängsebene E-E befestigt und umgelenkt. Zur Befestigung des Gliedes 12 ist an diesem eine Öse 26 angebracht, zu deren Lagerhalterung eine Klammer 27 vorgesehen ist. Die Öse 26 stützt sich an einem mit dem Profil 22 verbundenen Zapfen 28 ab. Zur Umlenkung des Gliedes 13 dient eine Rolle 29, die bei 30 drehbar gelagert ist. Im Bereich der Rolle 29 ist die das Profil 22 umschließende Abdeckplane 10 und zwar auf der offenen Seite des Profils mit einer Öffnung 31 versehen, die mit einer Rosette 32 abgedeckt ist. Die Rosette 32 weist Führungsabschnitte 33 für das Glied 12 auf, dessen freies Ende ja mit der Heckklappe 4 verbunden ist. Das Glied 13 ist prinzipgleich, jedoch spiegelbildlich, befestigt und umgelenkt. Der Abstand zwischen 24 und 25 wird im wesentlichen durch den Öffnungswinkel der Heckklappe 4 bestimmt.

Die Glieder 11, 12, 13 werden durch gummielastische Schnüre, vorzugsweise mit kreisrundem Querschnitt, gebildet. Jedes der dem Aufbau 2 bzw. der Heckklappe 4 zugekehrten Enden, beispielsweise 34 (Glied 11) der Schnüre weist eine Verdickung 35 auf, die in einer korrespondierenden Öffnung 36 eines Befestigungsteiles 37 angeordnet ist. Das Glied 11 liegt mit der Verdickung 35 an einem Anschlag 38 des Befestigungsteiles 37 an und durchdringt eine Öffnung 39 derselben. Zusätzlich kann die Verdickung 35 mittels einer Klebeverbindung gehalten werden. Auf der dem Rohr 18 zugekehrten Seite weist die Öffnung 39 eine Anfasung 40 auf (Fig. 2).

Das Befestigungsteil 37, das aus Kunststoff besteht, wird mittels eines Schnellverschlusses 41 in einer am Aufbau 2 angebrachten Aufnahmevorrichtung 42 gehalten. Der Schnellverschluß 41 wird durch Teil 43 und 44 des Befestigungsteiles 37 bzw. der Aufnahmevorrichtung 42 gebildet, die durch 90° Drehung in Eingriff bzw. außer Eingriff gebracht werden (Fig. 4).

Beim Verschwenken der Heckklappe 4 in Richtung B werden die Glieder 12, 13 um einen wesentlichen Betrag gedehnt. Die Abdeckplane 10, die über das Rohr 18 und das Glied 11 schwenkbar ist, wird im vorderen Bereich angehoben, dergestalt, daß der Kofferraum zugänglich ist.

Die ebenfalls aus Kunststoff bestehende Aufnahmevorrichtung 42 hat eine kreiszylindrische Grundform, durchdringt mit einem Abschnitt 45 eine Öffnung 46 einer Wand 47 des Aufbaues 2 und ist mittels eines Halteelementes 48 befestigt, das sich am Umfang der Aufnahmevorrichtung 41 bzw. an der Wand 47 abstützt.

Die Ausbildung und Halterung der Befestigungsteile an den Gliedern 12 und 13 entspricht denen des beschriebenen Befestigungsteiles 37.

## Patentansprüche

1. Abdeckplane (10), für einen in einem Personenwagen (1) vorgesehenen Kofferraum (3), der über eine um eine horizontale Scharnierachse bewegbare Heckklappe (4) zugänglich ist, wobei die aus elastischem Werkstoff bestehende Abdeckplane (10) am Aufbau (2) und an der Heckklappe (4) befestigt ist, dadurch gekennzeichnet, daß zur Befestigung der Abdeckplane (10) an sich bekannte elastische Glieder (11, 12, 13) dienen, daß jedes elastische Glied (11, 12, 13) in und entlang eines wesentlichen Teils der Länge eines von zwei mit der Abdeckplane (10) verbundenen, quer zur Fahrzeuglängsrichtung verlaufenden hohlprofilartigen Elementen (14, 15) geführt ist, daß jedes elastische Glied (11) entweder mit beiden Enden außerhalb des Elements (14) verläuft, wobei jedes Ende des elastischen Glieds (11) am Aufbau oder der Heckklappe befestigt ist, oder ein Ende innerhalb des hohlprofilartigen Elements (15) gehalten ist, wogegen das jeweilige andere Ende dieser Glieder am Aufbau (2) oder an der Heckklappe (4) befestigt ist.

2. Abdeckplane nach Anspruch 1, dadurch gekennzeichnet, daß das Element (14) zur aufbauseitigen Befestigung durch ein Rohr (18) gebildet wird, dessen Enden mit Einsätzen (20) versehen sind, die Führungsabschnitte (21) für das Glied (11) aufweisen.

3. Abdeckplane nach Anspruch 1, dadurch gekennzeichnet, daß das Element zur klappenseitigen Befestigung durch ein im Querschnitt U-förmiges Profil (22) gebildet wird, das von der Abdeckplane (10) umschlossen ist.

4. Abdeckplane nach Anspruch 3, dadurch gekennzeichnet, daß innerhalb des Profils (22) die zwei Glieder (12, 13) vorgesehen sind, wovon jedes an gegenüberliegenden Seiten (24, 25) gehalten bzw. umgelenkt wird.

5. Abdeckplane nach Anspruch 4, dadurch gekennzeichnet, daß zur Umlenkung der Glieder (12, 13) drehbare Rollen (29) am Profil (22) angebracht sind.

6. Abdeckplane nach Anspruch 5, dadurch gekennzeichnet, daß im Bereich der Rollen (29) die Glieder (12, 13) Öffnungen (31) in der Abdeckplane (10) durchdringen, die durch Rosetten (32) mit Führungsabschnitten (33) für die Glieder (12, 13) versehen sind.

7. Abdeckplane nach einem oder mehreren der vorangehenden Ansprüche, dadurch gekennzeichnet, daß die Glieder (11, 12, 13) durch gummielastische Schnüre gebildet werden.

8. Abdeckplane nach Anspruch 7, dadurch gekennzeichnet, daß die dem Aufbau bzw. der Heckklappe (4) zugekehrten Enden (34) der Schnüre Verdickungen (35) aufweisen, die in Befestigungsteilen (37) gehalten sind.

9. Abdeckplane nach Anspruch 8, dadurch gekennzeichnet, daß die Befestigungsteile (37) über Schnellverschlüsse (41) mit am Aufbau (12) bzw. an der Heckklappe (4) vorgesehenen Aufnahmevorrichtungen (42) zusammenwirken.

## Claims

1. A canvas cover (10), for a boot (3) provided in a passenger car (1), which is accessible by way of a tailgate (4) movable about the axis of a horizontal hinge, the canvas cover (10) which consists of a resilient material being secured to the bodywork (2) and to the tailgate (4), characterized in that resilient members (11, 12, 13) know per se are used to secure the canvas cover (10), each resilient member (11, 12, 13) is guided in and along a substantial part of the length of one of two hollow-section elements (14, 15) joined to the canvas cover (10) and extending transversely to the longitudinal direction of the vehicle, and each resilient member (11) either extends with both ends outside the element (14), each end of the resilient member (11) being secured to the bodywork or the tailgate, or one end is held inside the hollow-section element (15), while the respective other end of these members is secured to the bodywork (2) or the tailgate (4).

2. A canvas cover according to claim 1, characterized in that the element (14) for fastening to the bodywork is formed by a tube (18), the ends of which are provided with inserts (20) which comprise the guide portions (21) for the member (11).

3. A canvas cover according to claim 1, characterized in that the element for fastening to the tailgate is formed by a section (22) which is U-shaped in cross-section and which is surrounded by the canvas cover (10).

4. A canvas cover according to claim 3, characterized in that the two members (12, 13), each of which is held or turned round respectively on opposite sides (24, 25), are provided inside the section (22).

5. A canvas cover according to claim 4, characterized in that rotatable rollers (29) are provided on the section (22) for turning round the members (12, 13).

6. A canvas cover according to claim 5, characterized in that in the region of the rollers (29) the members (12, 13) pass through openings (31) in the canvas cover (10), which are provided with collars (32) with guide portions (33) for the members (12, 13).

7. A canvas cover according to one or more of the preceding claims, characterized in that the members (11, 12, 13) are formed by elastic rubber cords.

8. A canvas cover according to claim 7, characterized in that the ends (34) of the cords facing the bodywork or the tailgate (4) are provided with thickened portions (35) which are held in reinforcement members (37).

9. A canvas cover according to claim 8, characterized in that the reinforcement members (37) cooperate by way of snap closures (41) with receiving apparatus (42) provided on the bodywork (12) or on the tailgate (4).

## Revendications

1. Bâche (10) pour un coffre à bagages (3), se trouvant dans une voiture particulière (1), accessible grâce à un hayon (4) mobile autour d'un axe de charnière horizontal, la bâche (10) en matière élastique étant fixée à la carrosserie (2) et au hayon (4), caractérisée en ce que la fixation de la bâche (10) est assurée par des organes élastiques (11, 12, 13) connus en soi, en ce que chaque organe élastique (11, 12, 13) est guidé dans et le long d'une partie importante de la longueur de l'un de deux éléments (14, 15) en forme de profilés creux, dirigés perpendiculairement à la direction longitudinale du véhicule, reliés à la bâche (10), en ce que chaque organe élastique (11) est avec ses deux extrémités à l'extérieur de l'élément (14), chaque extrémité de l'organe élastique (11) étant fixée à la carrosserie ou au hayon, ou bien une extrémité est retenue à l'intérieur de l'élément en forme de profilé creux (15), tandis que l'autre extrémité respective de chacun de ces éléments est fixée à la carrosserie (2) ou au hayon (4).

2. Bâche selon la revendication 1, caractérisée en ce que l'élément (14) est conformé pour la fixation à la carrosserie par un tube (18) dont les extrémités comportent des insertions (20) qui comportent des sections de guidage (21) pour l'organe (11).

3. Bâche selon la revendication 1, caractérisée en ce que l'élément est conformé pour la fixation au hayon par un profilé de section droite en U (22), entouré par la bâche (10).

4. Bâche selon la revendication 3, caractérisée en ce qu'à l'intérieur du profilé (22) se trouvent les deux organes (12, 13) dont chacun est retenu ou articulé sur des côtés (24, 25) opposés.

5. Bâche selon la revendication 4, caractérisée en ce que des rouleaux rotatifs (29) sont placés sur le profilé (22) pour dévier les organes (12, 13).

6. Bâche selon la revendication 5, caractérisée en ce qu'au voisinage des rouleaux (29), les organes (12, 13) traversent des ouvertures (31) de la bâche (10) qui comportent des rosettes (32) pourvues de sections de guidage (33) pour les organes (12, 13).

7. Bâche selon une ou plusieurs des revendications précédentes, caractérisée en ce que les organes (11, 12, 13) sont formés par des cordons élastiques.

8. Bâche selon la revendication 7, caractérisée en ce que les extrémités (34) des cordons situées vers la carrosserie ou le hayon (4) comportent des épaississements (35) qui sont maintenus dans des éléments de fixation (37).

9. Bâche selon la revendication 8, caractérisée en ce que les éléments des fixation (37) coopèrent, par des fermetures instantanées (41) avec des dispositifs de réception (42) se trouvant sur la carrosserie (2) ou le hayon (4).

Fig.1

~3~

0 046 149

Fig.2

Fig.4

Fig.3